# EUROPÄISCHE PATENTSCHRIFT

(11) **EP 2 414 646 B1**
(45) Veröffentlichungstag und Bekanntmachung des Hinweises auf die Patenterteilung: **17.12.2014**
(21) Anmeldenummer: 10702694.0
(22) Anmeldetag: 08.02.2010
(51) Int. Cl.: F01N 3/20

(54) **EINSPRITZEINRICHTUNG FÜR HARNSTOFFWASSERLÖSUNG**
INJECTION APPARATUS FOR UREA AQUEOUS SOLUTION
DISPOSITIF D'INJECTION POUR SOLUTION AQUEUSE D'URÉE

(30) Priorität: 02.04.2009 DE 102009002120
(43) Veröffentlichungstag der Anmeldung: 08.02.2012
(73) Patentinhaber: Robert Bosch GmbH, 70442 Stuttgart (DE)
(72) Erfinder: Krause, Michael, 67705 Trippstadt (DE); Haeberer, Rainer, 75015 Bretten (DE)
(86) Internationale Anmeldenummer: PCT/EP2010/051479
(87) Internationale Veröffentlichungsnummer: WO 2010/112254

(56) Entgegenhaltungen:
- EP-A1- 2 034 148
- DE-A1-102006 017 399
- DE-A1-102008 008 324
- DE-U1-202006 010 615

## Beschreibung

### Stand der Technik

Die Immissionsgrenzwerte für Stickoxide erfordern vor allem bei schweren Kraftfahrzeugen Abgasnachbehandlungseinrichtungen, die eine selektive katalytische Reduktion (SCR) der in den Rohemissionen der Brennkraftmaschine enthaltenen Stickoxide vornehmen. Dieses sogenannte SCR-Verfahren zur Abgasreinigung ist aus dem Stand der Technik bekannt, sodass auf eine detaillierte Erläuterung der bei diesem Verfahren ablaufenden chemischen Vorgänge verzichtet werden kann.

Ein Beispiel einer solchen Abgasnachbehandlungseinrichtung ist aus der DE 10 2006 012 855 A1 bekannt. Dort wird eine wässerige Harnstofflösung in einem Tank gespeichert und von einem Fördermodul und mit Hilfe eines Dosierventils bedarfsabhängig in ein Abgasrohr der Brennkraftmaschine eingedüst. DE 10 2008 008 324 bencheibt eine Einspritzeinrichtung für Harnstoff-Wass-lösung nach dem Oberbegriff des Anspruchs 1.

Bei diesem System wird das Fördermodul direkt mit dem Tank verschraubt und bildet eine kompakte Einheit. Die Schnittstelle zwischen Tank und Fördermodul besteht daher aus einer Saugleitung, einer Rücklaufleitung. Das Fördermodul wird in aller Regel mit drei Schrauben auf einer ersten Befestigungsplatte des Tanks befestigt.

### Offenbarung der Erfindung

Der Erfindung liegt die Aufgabe zugrunde, die Flexibilität der Einspritzeinrichtung hinsichtlich Bauraumbedarf und Anordnung von Tank und Fördermodul relativ zueinander zu erhöhen.

Diese Aufgabe wird erfindungsgemäß durch die Merkmak des Anspruchs 1 gelöst.

Durch dieses erfindungsgemäße Zwischenelement ist es möglich, bei Bedarf das Fördermodul und den Tank an unterschiedlichen Stellen im Kraftfahrzeug zu positionieren und die erforderliche hydraulische Verbindung zwischen Tank und Fördermodul mit dem Zwischenelement herzustellen.

Dadurch, dass das Zwischenelement an dem dem Fördermodul zugewandten Ende eine der ersten Durchführung des Tanks entsprechende zweite Durchführung aufweist, ist es ohne konstruktive Änderungen an Tank oder Fördermodul möglich, alternativ den Tank und das Fördermodul direkt miteinander zu verbinden oder Fördermodul und Tank an unterschiedlichen Stellen des Fahrzeugs zu positionieren und die dann erforderliche hydraulische Verbindung durch das Zwischenelement herzustellen.

Man gewinnt also durch das erfindungsgemäße Zwischenelement Flexibilität, ohne dass an dem Fördermodul oder dem Tank Änderungen vorgenommen werden müssten.

Erfindungsgemäß umfasst die Verbindungsleitung des Zwischenelements eine Saugleitung und eine Rücklaufleitung.

Dadurch ist es möglich, auch die Rücklaufleitung des Fördermoduls hydraulisch mit dem Tank zu verbinden.

Erfindungogendß ist an dem Tank eine erste Befestigungsplatte ausgebildet, und an dem dem Tank zugewandten Ende des Zwischenelements eine mit der ersten Befestigungsplatte zusammenwirkende erste Adapterplatte ausgebildet. Dadurch ist es möglich, das Zwischenelement in der gleichen Weise wie sonst das Fördermodul mit dem Tank zu verbinden. Dies kann bevorzugt über drei gleichmäßig über den Umfang verteilte Schrauben erfolgen.

Dadurch ist es möglich, zwischen einem bereits in Serie gefertigten Fördermodul, das ursprünglich für die direkte Verbindung mit dem Tank vorgesehen war, ein erfindungsgemäßes Zwischenelement einzufügen und dadurch, ohne jegliche konstruktive Änderungen am Fördermodul bzw. dem Tank, die Flexibilität hinsichtlich Anordnung der genannten Komponenten/Baugruppen zu erhöhen.

Dadurch ist es auch möglich, bei vorgegebenen Bauraum das Tankvolumen zu vergrößern indem das Fördermoduls an einen anderen Einbauort verlagert wird. Durch werden die Intervalle, innerhalb derer Harnstoffwasserlösung nachgefüllt werden muss, verlängert.

Um zu gewährleisten, dass das Zwischenelement einenends mit dem Tank und anderenends mit dem Fördermodul verbindbar ist, sind in der ersten Befestigungsplatte des Tanks Befestigungsmittel, insbesondere Gewindehülsen, Durchgangsbohrungen und/oder Teile einer Schnappverbindung, ausgebildet.

Selbstverständlich sind die an dem Zwischenelement vorgesehene ausgebildete erste Adapterplatte und die am Fördermodul ausgebildete zweite Adapterplatte so gestaltet, dass sie mit den Befestigungsplatten eine lösbare Verbindung ermöglichen.

So können z. B. in der ersten Adapterplatte des Zwischenelements und der zweiten Adapterplatte des Fördermoduls Durchgangsbohrungen vorgesehen sein, die ein Verschrauben von Tank und Zwischenelement sowie Zwischenelement und Fördermodul erlauben.

In weiterer vorteilhafter Ausgestaltung der Erfindung ist vorgesehen, dass das Zwischenelement mindestens eine elektrische Heizung aufweist, wobei in besonders bevorzugter Ausgestaltung im Bereich der ersten Adapterplatte und der zweiten Befestigungsplatte jeweils eine Heizung vorgesehen ist. Zusätzlich kann auch in der Leitung eine elektrische Heizung vorgesehen sein. Dadurch wird das Einfrieren der Harnstoffwasserlösung auch unter ungünstigen klimatischen Bedingungen wirkungsvoll verhindert.

Um den Bauraumbedarf zu optimieren und weitere Flexibilität hinsichtlich der Anordnung der beteiligten Baugruppen zu erhalten, kann es sein, dass die Leitung , insbesondere die Saugleitung und/oder der Rücklaufkanal seitlich aus der ersten Adapterplatte und/oder der zweiten Befestigungsplatte des Zwischenelements austreten. Dann nämlich kann die Bauhöhe reduziert werden. Es kann natürlich auch vorteilhaft sein, die Leitung senkrecht aus den genannten Platten herauszuführen.

In weiterer vorteilhafter Ausgestaltung der Erfindung mündet die Rücklaufleitung in den Saugkanal der Verbindungsleitung. Dadurch kann der Rücklaufkanal in der Leitung entfallen, ohne Einschränkungen in der Funktionalität.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnung

### Es zeigen

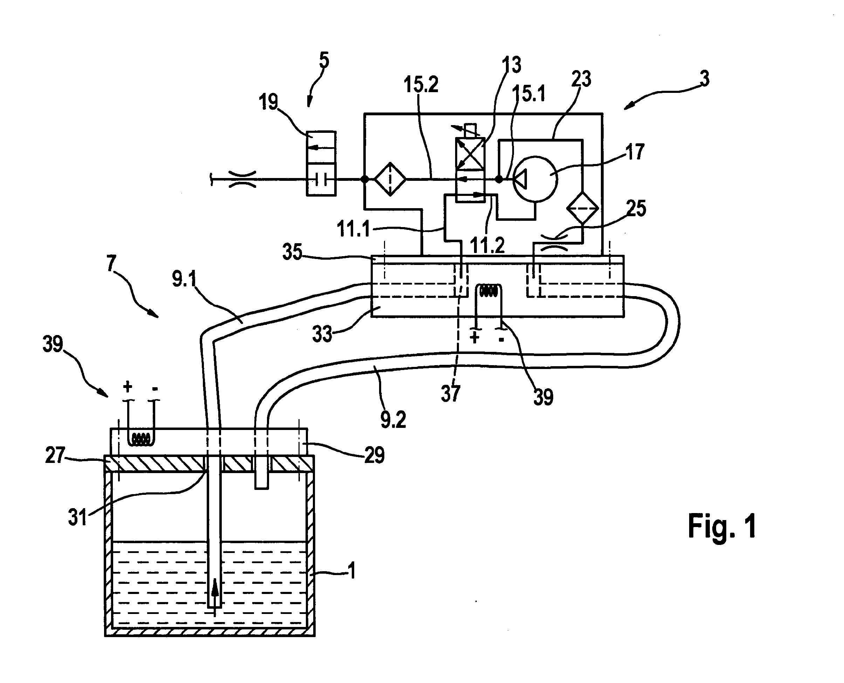

Figuren 1 bis 3 Ausführungsbeispiele erfindungsgemäßer Einspritzeinrichtungen.

In Figur 1 ist ein erstes Ausführungsbeispiel einer erfindungsgemäßen Einspritzeinrichtung dargestellt. Sie umfasst einen Tank 1, ein Fördermodul 3 sowie ein Dosiermodul 5. Zwischen dem Tank 1 und dem Fördermodul 3 ist ein Zwischenelement 7 mit einer Leitung 9 angeordnet. Die Leitung 9 umfasst zwei Kanäle, nämlich einen Saugkanal 9.1 und einen Rücklaufkanal 9.2.

Der Saugkanal 9.1 mündet in eine Saugleitung 11 des Fördermoduls 3. Die Saugleitung 11 wird durch ein 4/2-Wegeventil 13 in einen ersten Abschnitt 11.1 und einen zweiten Abschnitt 11.2 unterteilt. Entsprechendes gilt für eine Förderleitung 15, die von dem 4/2-Wegeventil 13 in einen ersten Abschnitt 15.1 und einen zweiten Abschnitt 15.2 unterteilt wird. Zwischen der Saugleitung 11 und der Förderleitung 15 ist eine Pumpe 17 vorgesehen.

Stromabwärts des 4/2-Wegeventils 13 ist in der Förderleitung 15 ein Dosiermodul 5, welches ein schaltbares Dosierventil 19 und einem Anschlussflansch umfasst. Mit Hilfe des Dosiermodul 5 wird die von der Förderpumpe 17 aus dem Tank 1 geförderte Harnstoff-Wasser-Lösung bei Bedarf in den Abgasstrang (nicht dargestellt) einer Brennkraftmaschine eingedüst. Des Weiteren können Filter (ohne Bezugszeichen) vorgesehen sein.

Von der Förderleitung 15 zweigt eine Rückleitung 23 ab, die bevorzugt mit einer Druckhalteeinrichtung, hier in Form einer Drossel 25, versehen ist. Die Rückleitung 23 mündet bei dem in Figur 1 dargestellt Ausführungsbeispiel in den Rücklaufkanal 9.2 der Leitung 7.

Die Einspritzeinrichtung arbeitet wie folgt:

Im Normalbetrieb hat das 4/2-Wegeventil 13 die in der Figur 1 dargestellte erste Schaltstellung. Dies bedeutet im Bezug auf das 4/2-Wegeventil 13, dass der erste Abschnitt 11.1 der Saugleitung mit dem zweiten Abschnitt 11.2 der Saugleitung 11 verbunden wird. Entsprechendes gilt für den ersten Abschnitt 15.1. der Förderleitung und den zweiten Abschnitt 15.1 der Förderleitung.

Um in der Förderleitung 15 einen vorgegebenen Druck aufrechtzuerhalten, wird die Förderpumpe 7 mit verminderter Drehzahl betrieben, wenn das Dosierventil 19 geschlossen ist und infolgedessen keine Harnstoff-Wasser-Lösung in den Abgasstrang eingedüst wird. Infolgedessen gelangt der von der Förderpumpe 17 geförderte Fluidstrom über die Rückleitung 23 und den Rücklaufkanal 9.2 der Leitung 7 wieder in den Tank 1. Aufgrund der als Drossel 25 ausgebildeten Druckhalteeinrichtung in der Rückleitung 23 wird ein vorgegebener Druck in der Förderleitung 15 aufgebaut beziehungsweise aufrechterhalten.

Wenn nun eine nicht dargestelltes Steuergerät der Brennkraftmaschine ermittelt hat, dass Harnstoff-Wasser-Lösung in den Abgasstrang eingedüst werden soll, wird bei laufender Förderpumpe 17 das Dosierventil von der in Figur 1 gezeigten Sperrstellung in die Durchflussstellung (nicht dargestellt) umgeschaltet. Infolgedessen wird Harnstoff-Wasser-Lösung in den Abgasstrang eingedüst. Sobald die vorgegebene Menge eingedüst wurde, wird das Dosierventil 19 wieder geschlossen.

Um die Förderleitung 15 und die Saugleitung 11 und die Leitung 7 entleeren zu können, wird das 4/2-Wegeventil 13 bei abgestellter Brennkraftmaschine in die zweite Schaltstellung (nicht dargestellt) gebracht und gleichzeitig das Dosierventil 19 in die Durchflussstellung gebracht. Dadurch saugt die Förderpumpe 17 über den zweiten Abschnitt der Förderleitung 15.2 und den zweiten Abschnitt der Saugleitung 11.2 Luft aus dem Abgasstrang der Brennkraftmaschine an und fördert diese über den ersten Abschnitt der Druckleitung 15.1 und den ersten Abschnitt der Saugleitung 11.1 in den Saugkanal 9.1 der Leitung 7.

Durch diese Maßnahme ist es möglich, die Leitungen des Systems inklusive des 4/2-Wege-Ventils 13 beziehungsweise mit Luft anstelle von Harnstoff-Wasserstoff-Lösung zu füllen, so dass diese Leitungen und die betroffenen Komponenten nicht gefrierfest ausgeführt werden müssen. Dadurch ergibt sich eine erhebliche Kostenersparnis und gleichzeitig wird die Gefahr von Schäden deutlich reduziert. Wenn die Brennkraftmaschine wieder in Betrieb genommen wird, sind die genannten Komponenten mit Luft gefüllt, so dass eine gewisse Zeit vergeht, bis die Förderpumpe 17 die Saugleitung 11 und einen Teil der Förderleitung 15 mit Harnstoff-Wasser-Lösung gefüllt hat.

Da bei geschlossenem Dosierventil 19 keine Harnstoff-Wasser-Lösung in den zweiten Abschnitt 15.2. der Förderleitung gefördert wird, wird unmittelbar nach dem Öffnen des Dosierventils 19 zunächst etwas Luft in den Abgasstrang eingeblasen und erst anschließend Harnstoff-Wasser-Lösung eingedüst. Dieses "Luftvolumen" ist bei der Ermittlung der Ansteuerdauer des Dosierventils 19 beim ersten Eindüsen von Harnstoff-Wasser-Lösung nach einer Entleerung der Leitungen und der anschließenden Wieder-Inbetriebnahme der Brennkraftmaschine durch das Steuergerät entsprechend zu berücksichtigen.

Um das erfindungsgemäße Zwischenelement 7 mit dem Tank 1 verbinden zu können, ist an dem Tank 1 eine erste Befestigungsplatte 27 ausgebildet. An einem dem Tank 1 zugewandten Ende des Zwischenelements 7 ist eine erste Adapterplatte 29 ausgebildet. Die erste Befestigungsplatte 27 und die erste Adapterplatte 29 können über nur symbolisch dargestellte Schraubverbindungen (s. die strichpunktierten Linien ohne Bezugszeichen) miteinander verschraubt werden.

In der ersten Befestigungsplatte 27 ist eine erste Durchführung 31 vorgesehen, durch die der Saugkanal 9.1 des Zwischenelements 7 in den Tank 1 eingeführt werden kann. In gleicher Weise wird der Rücklaufkanal 9.2 durch die erste Befestigungsplatte 27 hindurchgeführt. Selbstverständlich kann die erste Durchführung 31 sowohl den Saugkanal 9.1 als auch den Rücklaufkanal 9.2 vorgesehen sein.

An dem dem Fördermodul 3 zugewandten Ende des Zwischenelements 7 ist eine zweite Adapterplatte 33 ausgebildet, wobei die zweite Adapterplatte 33 mit dem Fördermodul 3 ebenfalls durch Schrauben miteinander verbunden ist. An der zweiten Adapterplatte 33 ist eine zweite Durchführung 37 ausgebildet, die baugleich mit der ersten Durchführung 31 in der ersten Befestigungsplatte 27 ausgebildet ist. Entsprechendes gilt auch für die weitere Durchführung (ohne Bezugszeichen) in der zweiten Adapterplatte 33, in die die Rücklaufleitung 23 des Fördermoduls 3 mündet.

Dies bedeutet, dass die erste Befestigungsplatte 27 und die zweite Adapterplatte 33 hinsichtlich ihrer Hauptabmessungen gleich ausgeführt sind, so dass es möglich wäre, auf das Zwischenelement 7 zu verzichten und das Fördermodul 3 direkt auf dem Tank 1 festzuschrauben oder auf andere Weise zu befestigen.

Dazu müssen die Positionen von der ersten Durchführung 31 und der zweiten Durchführung 37 sowie der Schraublöcher, mit denen (ohne Bezugszeichen) gleich sein. Auch die Durchführung für die Rückleitung 23 bzw. den Rücklaufkanal 9.2 in der zweiten Befestigungsplatte 33 bzw. der ersten Befestigungsplatte 37 müssen gleich sein.

Bei dem in Figur 1 dargestellten Ausführungsbeispiel treten der Saugkanal 9.1 und der Rücklaufkanal 9.2 senkrecht aus der ersten Adapterplatte 29 aus. Im Gegensatz dazu, münden sie seitlich in die zweite Befestigungsplatte 33. Durch diese exemplarische Konfiguration wird deutlich, dass die Kanäle 9.1 und 9.2 je nach vorhandenem Bauraum entweder senkrecht oder seitlich in die Platten 29 bzw. 33 eingeführt werden können.

Bei dem Ausführungsbeispiel gemäß Figur 1 sind an der ersten Adapterplatte 39 eine elektrische Widerstandsheizung 39 und auch an der zweiten Adapterplatte 33 eine elektrische Widerstandsheizung 39 vorgesehen. Die Widerstandsheizung 39 wird in die Platten29 bzw. 33 eingebettet, wenn diese aus Kunststoff gespritzt werden. Bei Bedarf kann die elektrische Widerstandsheizung in großflächige Aluminiumkörper (nicht dargestellt) gesteckt werden und diese Aluminiumkörper dann in die Platten 29 und 35 integriert werden. Dies ist besonders dann gut möglich, wenn die Platten aus thermoplastischem Kunststoff bestehen und somit durch Spritzen hergestellt werden.

Idealerweise sollten die Aluminiumkörper in unmittelbarer Nähe der Kanäle 9.1 und 9.2 verlaufen, so dass die Wärmeübertragung auf die in den Kanälen befindliche Harnstoffwasserlösung optimal ist.

Als elektrische Widerstandsheizung 39 werden bevorzugt Widerstandselemente mit positivem Temperaturkoeffizient verwandt, so dass sich eine Selbstregelung der Heizleistung in Abhängigkeit von der Temperatur ergibt. Diese sogenannten PTC-Heizungen sind am Markt verfügbar.

Die Saugkanäle 9.1 und 9.2 müssen bei Umgebungstemperaturen unter-11° C in aller Regel beheizt werden, um ein Einfrieren des Reduktionsmittels zu verhindern. Dazu wird vorteilhafterweise ebenfalls eine Widerstandsheizung eingesetzt. Diese Heizung ist in Figur 1 nicht dargestellt. Es versteht sich von selbst, dass es in diesem Fall sinnvoll und vorteilhaft ist, die Kanäle 9.1 und 9.2 möglichst nahe beieinander zu führen und beispielsweise durch eine zwischen den beiden Kanälen angeordnete ohmsche Widerstandsheizung zu beheizen.

Selbstverständlich ist es auch möglich, eine Heizwendel um die beiden Kanäle 9.1 und 9.2 herumzuwickeln, und dadurch die Heizleistung zu erhöhen.

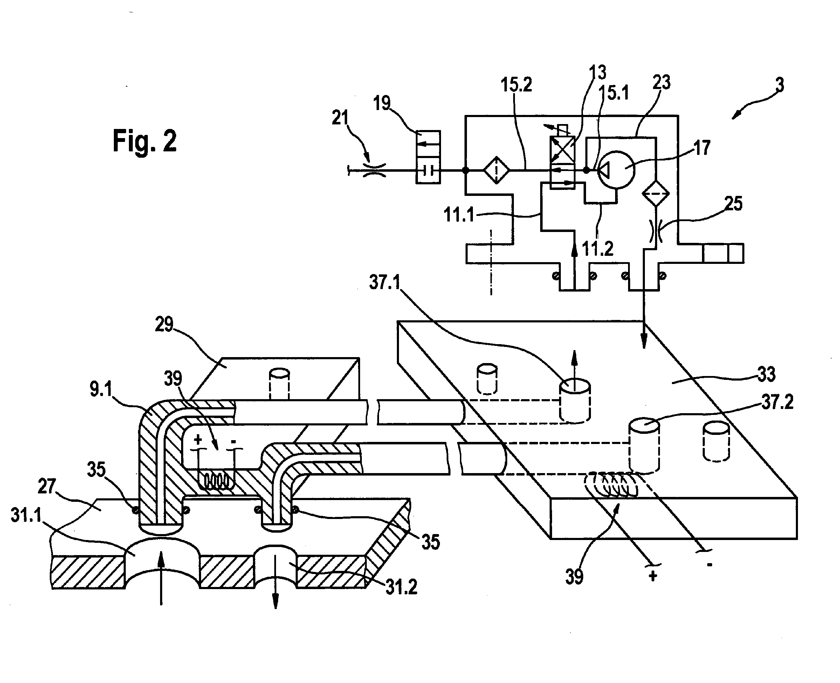

In Figur 2 ist ein zweites Ausführungsbeispiel der erfindungsgemäßen Einspritzeinrichtung dargestellt. Gleiche Bauteile werden mit gleichen Bezugszeichen versehen und es gilt das bezüglich Figur 1 Gesagte entsprechend.

Bei diesem Ausführungsbeispiel ist das der ersten Befestigungsplatte 27 des Tanks 1 zugewandte Ende des Zwischenelements 7 als Kunststoffspritzteil mit zwei zylindrischen Enden (ohne Bezugszeichen) ausgebildet. In dem ersten zylindrischen Ende mündet der Saugkanal 9.1, während in dem zweiten zylindrischen Ende der Rücklaufkanal 9.2 mündet. In Figur 2 ist die erste Adapterplatte 29 teilweise geschnitten dargestellt, um den Verlauf der Kanäle 9.1, 92. und die Anordnung der Heizung 39 zu verdeutlichen.

Um die beiden zylindrischen Enden herum sind O-Ringe 35 angeordnet. Mit diesen beiden zylindrischen Enden wird das Zwischenelement 7 in die erste Durchführung 31.1 und 31.2 der ersten Befestigungsplatte 27 eingeführt und mit Hilfe der O-Ringe 35 abgedichtet. Wenn man nun das zu diesem Ausführungsbeispiel gehörende Fördermodul 3 betrachtet, wird deutlich, dass auch die Saugleitung 11 und die Rückleitung 23 in zwei gleich gestaltete zylindrische Enden münden, die mit O-Ringen versehen sind. Diese zylindrischen Enden des Fördermoduls 3 werden in die entsprechenden zweiten Durchführungen 37.1 und 37.2 der zweiten Adapterplatte 33 dichtend eingeführt.

Wenn das erfindungsgemäße Zwischenelement 7 nicht erforderlich sein sollte, kann es ersatzlos entfallen und das Fördermodul 3 wird direkt in die ersten Durchführungen 37.1 und 37.2 der ersten Befestigungsplatte 27 des Tanks 1 eingesteckt und mit dem Tank 1 verschraubt.

Auch bei diesem Ausführungsbeispiel tritt die Leitung 9 senkrecht aus ersten Adapterplatte 27 aus und seitlich in die zweite Adapterplatte 33 ein.

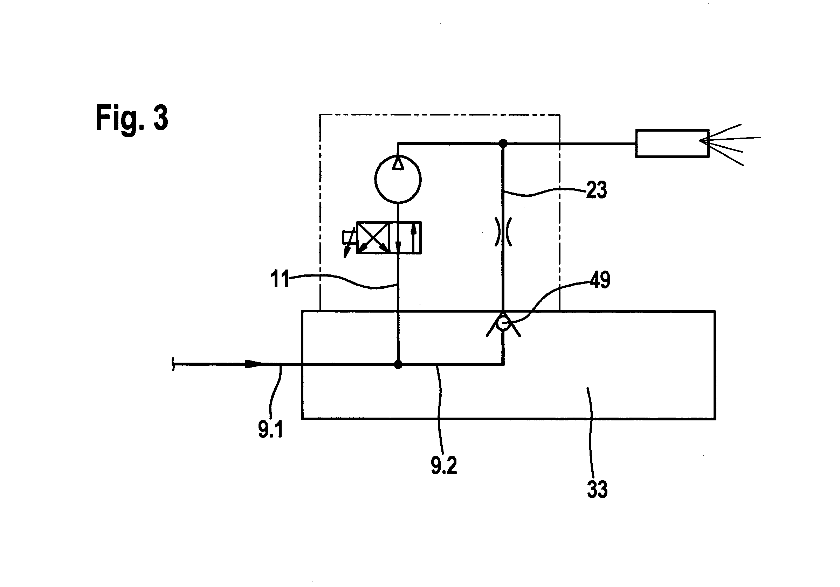

In Figur 3 ist eine zweite Adapterplatte 33 stark vereinfacht dargestellt. Bei diesem Ausführungsbeispiel mündet der Rücklaufkanal 9.2 innerhalb der zweiten Adapterplatte 33 in den Saugkanal 9.1, so dass zwischen der zweiten Adapterplatte 33 und der nicht dargestellten ersten Adapterplatte 27 des Zwischenelements 7 nur eine Leitung mit einem Saugkanal 9.1 ausgebildet sein muss.

Damit die Strömungsrichtung innerhalb des Saugkanals 9.1 sichergestellt ist, ist in dem Rücklaufkanal 9.1 ein Rückschlagventil 49eingebaut. Dieses Rückschlagventil 49 hat vorzugsweise einen niedrigen Öffnungsdruck von beispielsweise 2 bar. Dieser Öffnungsdruck hat sich insbesondere dann bewährt, wenn die Förderpumpe 17 einen Förderdruck von etwa 5 bar hat.

## Patentansprüche

1. Einspritzeinrichtung für Harnstoff-Wasser-Lösung mit einem Fördermodul (3) und mit einem Tank (1), wobei das Fördermodul (32) eine Pumpe (17), eine Saugleitung (11) und eine Rücklaufleitung (23) umfasst, wobei an dem Tank X (1) eine erste Durchführung (31) für die Saugleitung (11) vorgesehen ist, wobei zwischen Tank (1) und Fördermodul (3) ein Zwischenelement (7) mit einer Verbindungsleitung (9) angeordnet ist, dass die Verbindungsleitung (9) an einem dem Tank (1) zugewandten Ende mit der ersten Durchführung (31) in dem Tank (1) zusammenwirkt, und dass das Zwischenelement (7) an einem dem Fördermodul (3) zugewandten Ende eine der ersten Durchführung (31) entsprechende zweite Durchführung (37) aufweist, wobei die Verbindungsleitung (9) des Zwischenelements (7) eine Saugleitung (9.1) und eine Rücklaufleitung (9.2) umfasst, **dadurch gekennzeichnet, dass** an dem Tank (1) eine erste Befestigungsplatte (27) ausgebildet ist, und wobei an dem dem Tank (1) zugewandten Ende des Zwischenelements (7) eine mit der ersten Befestigungsplatte (27) zusammenwirkende erste Adapterplatte (29) ausgebildet ist, wobei an einem dem Fördermodul (3) zugewandten Ende des Zwischenelements (7) eine zweite Adapterplatte (33) ausgebildet ist, und wobei das Fördermodul (3) mit der zweiten Adapterplatte (33) kompatibel ist, und wobei die erste Befestigungsplatte (27) des Tanks (1) und die zweite Adapterplatte (33) des Zwischenelements (7) hinsichthich ihrer Hanptabmissungen gleich sind.

2. Einspritzeinrichtung nach Anspruch 1, **dadurch gekennzeichnet, dass** in der ersten Befestigungsplatte (27) des Tanks (1) und der zweiten Adapterplatte (33) des Zwischenelements (7) Befestigungsmittel, insbesondere Gewindehülsen, Durchgangsbohrungen und/oder Teile einer Schnappverbindung, ausgebildet sind,

3. Einspritzeinrichtung nach einem der vorhergehenden Ansprüche, **dadurch gekennzeichnet, dass** das Zwischenelement (7) mindestens eine elektrische Heizung (39) aufweist,

4. Einspritzeinrichtung nach Anspruch 3, **dadurch gekennzeichnet, dass** in der ersten Befestigungsplatte (27), der ersten Adapterplatte (29), der zweiten Adapterplatte (33) und/oder parallel zu der Verbindungsleitung (9) eine elektrische Heizung (39) vorgesehen ist.

5. Einspritzeinrichtung nach einem der vorhergehenden Ansprüche, **dadurch gekennzeichnet, dass** die Verbindungsleitung (9) seitlich aus der ersten Adapterplatte (29) und/oder der zweiten Adapterplatte (33) austritt.

6. Einspritzeinrichtung nach einem der vorhergehenden Ansprüche, **dadurch gekennzeichnet, dass** der Rücklaufkanal (9.2) der Verbindungsleitung (9) in der zweiten Adapterplatte (33) in den Saugkanal (9.1) mündet.

7. Einspritzeinrichtung nach Anspruch 6, **dadurch gekennzeichnet, dass** in dem Rücklaufkanal (9.2) ein Rückschlagventil oder ein Druckbegrenzungsventil (49) vorgesehen ist.

8. Einspritzeinrichtung nach einem der vorhergehenden Ansprüche, **dadurch gekennzeichnet, dass** das Fördermodul (3) eine Förderleitung (15) und ein Dosiermodul (5) umfasst.

9. Einspritzeinrichtung nach einem der vorhergehenden Ansprüche, **dadurch gekennzeichnet, dass** die Verbindungsleitung (9) des Zwischenelements (7) mindestens eine elektrische Leitung umfasst.

## Claims

1. Injection device for a urea/water solution having a delivery module (3) and having a tank (1), the delivery module (3) comprising a pump (17), a suction line (11) and a return line (23), a first leadthrough (31) for the suction line (11) being provided on the tank (1), an intermediate element (7) having a connecting line (9) being arranged between the tank (1) and the delivery module (3), the connecting line (9) interacting with the first leadthrough (31) in the tank (1) at an end which faces the tank (1), and the intermediate element (7) having a second leadthrough (37) which corresponds to the first leadthrough (31) at an end which faces the delivery module (3), the connecting line (9) of the intermediate element (7) comprising a suction line (9.1) and a return line (9.2), **characterized in that** a first fastening plate (27) is formed on the tank (1), and a first adapter plate (29) which interacts with the first fastening plate (27) being formed at that end of the intermediate element (7) which faces the tank (1), a second adapter plate (33) being formed at an end of the intermediate element (7) which faces the delivery module (3), and the delivery module (3) being compatible with the second adapter plate (33), and the first fastening plate (27) of the tank (1) and the second adapter plate (33) of the intermediate element (7) being identical with regard to their main dimensions.

2. Injection device according to Claim 1, **characterized in that** fastening means, in particular threaded sleeves, through holes and/or parts of a snap-action connection, are formed in the first fastening plate (27) of the tank (1) and the second adapter plate (33) of the intermediate element (7).

3. Injection device according to one of the preceding claims, **characterized in that** the intermediate element (7) has at least one electric heater (39).

4. Injection device according to Claim 3, **characterized in that** an electric heater (39) is provided in the first fastening plate (27), the first adapter plate (29), the second adapter plate (33) and/or parallel to the connecting line (9).

5. Injection device according to one of the preceding claims, **characterized in that** the connecting line (9) exits laterally from the first adapter plate (29) and/or the second adapter plate (33).

6. Injection device according to one of the preceding claims, **characterized in that** the return channel (9.2) of the connecting line (9) in the second adapter plate (33) flows into the suction channel (9.1).

7. Injection device according to Claim 6, **characterized in that** a non-return valve or a pressure relief valve (49) is provided in the return channel (9.2).

8. Injection device according to one of the preceding claims, **characterized in that** the delivery module (3) comprises a delivery line (15) and a metering module (5).

9. Injection device according to one of the preceding claims, **characterized in that** the connecting line (9) of the intermediate, element (7) comprises at least one electrical line.

## Revendications

1. Dispositif d'injection pour une solution aqueuse d'urée avec un module d'alimentation (3) et avec un réservoir (1), dans lequel le module d'alimentation (3) comprend une pompe (17), une conduite d'aspiration (11) et une conduite de retour (23), dans lequel il est prévu sur le réservoir (1) un premier passage (31) pour la conduite d'aspiration (11), dans lequel un élément intermédiaire (7) avec une conduite de raccordement (9) est disposé entre le réservoir (1) et le module d'alimentation (3), dans lequel la conduite de raccordement (9) coopère à une extrémité orientée vers le réservoir (1) avec le premier passage (31) dans le réservoir (1), et dans lequel l'élément intermédiaire (7) présente, à une extrémité orientée vers le module d'alimentation (3), un deuxième passage (37) correspondant au premier passage (31), dans lequel la conduite de raccordement (9) de l'élément intermédiaire (7) comprend une conduite d'aspiration (9.1) et une conduite de retour (9.2), **caractérisé en ce qu'**une première plaque de fixation (27) est formée sur le réservoir (1) et dans lequel une première plaque d'adaptateur (29) coopérant avec la première plaque de fixation (27) est formée à l'extrémité de l'élément intermédiaire (7) orientée vers le réservoir (1), dans lequel une deuxième plaque d'adaptateur (33) est formée à une extrémité de l'élément intermédiaire (7) orientée vers le module d'alimentation (3), et dans lequel le module d'alimentation (3) est compatible avec la deuxième plaque d'adaptateur (33), et dans lequel la première plaque de fixation (27) du réservoir (1) et la deuxième plaque d'adaptateur (33) de l'élément intermédiaire (7) sont identiques en ce qui concerne leurs dimensions principales.

2. Dispositif d'injection selon la revendication 1, **caractérisé en ce que** des moyens de fixation, en particulier des douilles filetées, des trous de passage et/ou des parties d'assemblage à déclic, sont formés dans la première plaque de fixation (27) du réservoir (1) et la deuxième plaque d'adaptateur (33) de l'élément intermédiaire (7).

3. Dispositif d'injection selon l'une quelconque des revendications précédentes, **caractérisé en ce que** l'élément intermédiaire (7) présente au moins un chauffage électrique (39).

4. Dispositif d'injection selon la revendication 3, **caractérisé en ce qu'**il est prévu un chauffage électrique (39) dans la première plaque de fixation (27), la première plaque d'adaptateur (29), la deuxième plaque d'adaptateur (33) et/ou parallèlement à la conduite de raccordement (9).

5. Dispositif d'injection selon l'une quelconque des revendications précédentes, **caractérisé en ce que** la conduite de raccordement (9) sort latéralement hors de la première plaque d'adaptateur (29) et/ou de la deuxième plaque d'adaptateur (33).

6. Dispositif d'injection selon l'une quelconque des revendications précédentes, **caractérisé en ce que** le canal de retour (9.2) de la conduite de raccordement (9) débouche dans le canal d'aspiration (9.1) dans la deuxième plaque d'adaptateur (33).

7. Dispositif d'injection selon la revendication 6, **caractérisé en ce qu'**il est prévu dans le canal de retour (9.2) un clapet anti-retour ou une soupape de limitation de pression (49).

8. Dispositif d'injection selon l'une quelconque des revendications précédentes, **caractérisé en ce que** le module d'alimentation (3) comprend une conduite d'alimentation (15) et un module de dosage (5).

9. Dispositif d'injection selon l'une quelconque des revendications précédentes, **caractérisé en ce que** la conduite de raccordement (9) de l'élément intermédiaire (7) comprend au moins une canalisation électrique.
